# EUROPEAN PATENT APPLICATION

(11) **EP 2 965 621 A1**
(43) Date of publication of application: **13.01.2016**
(21) Application number: 13877214.0
(22) Date of filing: 08.03.2013
(51) Int. Cl.: A01K 97/00

(54) **CONICAL SHAPE FOR HEAVY WEIGHT AND/OR METALLIC RIGID MESHES**

(71) Applicant: Sanchez Raccaro, Rodrigo, 5480000 Puerto Montt (CL)
(72) Inventor: Sanchez Raccaro, Rodrigo, 5480000 Puerto Montt (CL)
(74) Representative: Carvajal y Urquijo, Isabel
(86) International application number: PCT/CL2013/000017
(87) International publication number: WO 2014/134747

(57) **Abstract**

The present invention relates to a conical shaped side panel of heavy weight and/or metallic rigid mesh which leads to a camber angle of at least 25 degrees of the bottom part of containment cages used for the cultivation and containment of aquatic species. This particular feature allows the disposal of mortality or any other given element by the use of a manual, semi-automatic or automatic mortality, suction system.

## Description

The use of heavy weight and/or metallic rigid meshs for the growing, nurturing and harvesting of aquatic species, has become more common worldwide. In this sense, the meshes of copper alloys are mostly used for growing kampachi and salmonids, as for optimizing operational variables, production and health, thanks to the advantageous properties of copper as an element, reducing deformation and maintenance, controlling of biofouling and improving health conditions, among others.

Nevertheless, several alternatives have been developed for the removal of the inevitable mortality that occurs in fish farms, both those operated by divers action, with more or less expertise depending on the depth of the fund, as those automatic, semiautomatic or manual operated by the principle of action by vacuum, which are in widespread use in markets such as Norway and Scotland, where cage's funds are required to generate at least a 25° degree camber angle, allowing suction systems to operate, preferably tapered at the bottom center, a feature that allows the said mortality of fish or any other desired element, to scroll to the bottom center of the cage, and then suctioned to the surface.

For this reason, and taking into consideration aquaculture's industry increasing use of heavy weight and/or metallic rigid meshs, especially those made out of copper alloys, it is necessary to develop a solution that generates a conical bottom with at least 25 degree camber angler towards the center of the bottom panel of the mesh, since these heavy weight and/or metallic rigid meshs, especially the chain link ones, do not allow cuts at angles less than 45 degrees, and the fact that they are rigid, makes them less deformable.

### DESCRIPTION OF THE INVENTION

The present invention relates to a conical shaped side panel of heavy weight and/or metallic rigid meshs which leads to a camber angle of at least 25 degrees. This particular feature allows the disposal of mortality or any other given element by the use of a manual, semi-automatic or automatic mortality, suction system.

The conical shape allows, among others, an efficient extraction of mortality from the bottom of the cage, since gravity itself interacts with the special angle in the cage's walls, which is achieved in heavy weight and/or metallic rigid meshs by the proposed design.

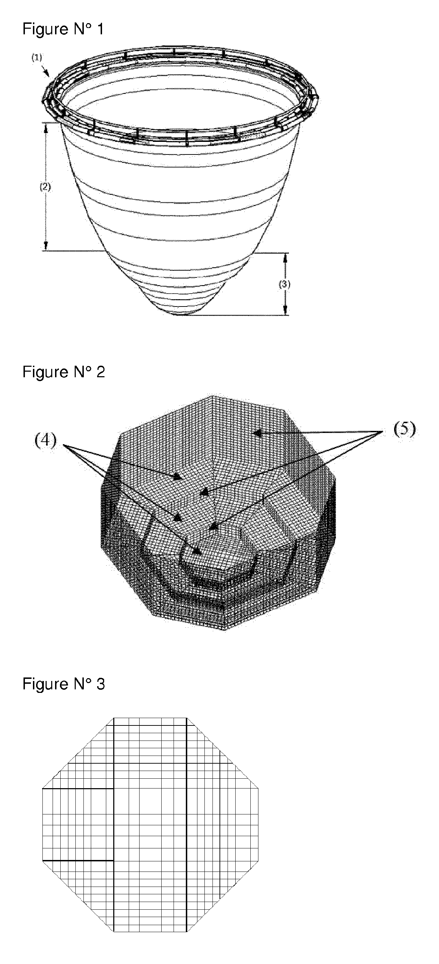

Figure N° 1 shows a sectional view of the raft-cage system, which displays a circular floating raft at the top (1), the side panels of the cage (2) and the conically shaped panels at the bottom (3).

The bottom panel's conical shape shown in Figure N ° 2, is achieved through the union of octagonal panels (4) and vertical lateral panels (5). The number and dimensions of these octagonal and vertical lateral panels is determined by the diameter of the raft to be used, regardless of its size. The height and camber angle of the bottom panel, fits whatever need the aquaculture activity may require in each and any case.

### "Horizontal" Bottoms

Figure N° 3 shows the first polygon (horizontal) corresponding to the bottom of the cage, it's construction involves the union of several independent pieces as shown in the present emboydment. The concept of "horizontal" mainly refers to the distribution of nominal working orientation of each of the sections, considered as independently of the shape that the structure will adopt once is deployed and working underwater.

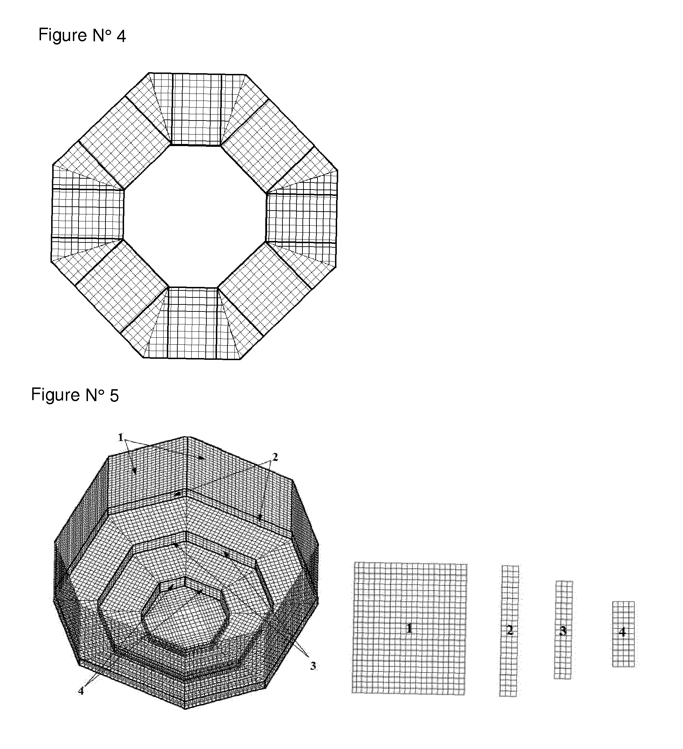

Figure 4 displays a horizontal octagonal section. This particular panel is considered as an "horizontal step" in the general configuration, which are then joint together by vertical panels (Figure 2). The number of these horizontal panels will depend on the desired depth and camber angle required for each productive activity. This section is mainly formed by the use of mesh panels shaped both rectangularly and polygonaly, as shown in Figure No. 4.

### Vertical bottoms and sub bottoms of the cage

To connect the horizontal sections, "sub-walls" or vertical panels are needed as seen in Figure N ° 5. These sections bind each of the proposed horizontal octagonal levels and once they are submerged and operating, will give the tapered end to the cage. The detail of the sections that form these walls and vertical walls of the sub-system, in its size, weight and number of panels are shown in Figure 5, which also incorporates a perspective view of each of the sections mentioned and their nominal spatial location in the design.

## Claims

1. A unique configuration using rigid mesh panels and / or heavy weight metal meshs **characterized by** giving a conical shape with an angle of inclination greater than or equal to 25 degrees to the containment mesh, which allows and facilitates the use of automatic, semiautomatic or manual mortality extraction and others, in raft-cage systems used for the cultivation or confinement of aquatic species.

2. A tapered bottom panel mesh according to claim No. 1 **characterized by** being installed below the side panels of the cage, constructed by octagonal and horizontal sections of vertical panels, resulting in the conical shape of the entire unit made with rigid and / or metal heavy weight meshs.

3. Panels or octagonal mesh's sections positioned horizontally according to claim No. 2, **characterized by** having a flat polygon which is located at the bottom of the system, then the successive octagonal sections are set in ascending order, tapering each raft /cage system using rigid and / or heavy weight metal meshs.

4. Horizontal panels or octagonal mesh's sections according to claim # 3, **characterized by** their capability of controling the containment system's conical shape, in terms of height and degree of taper, which can be controlled at user's request, by their number and dimentions.

5. Vertical panels or octagonal mesh's sections according to claim # 2, **characterized by** the capability of controling both the height and camber angle of the conically shaped containment system, as required by the user.
